# EUROPEAN PATENT APPLICATION

(11) **EP 4 678 568 A1**
(43) Date of publication of application: **14.01.2026**
(21) Application number: 25188262.7
(22) Date of filing: 08.07.2025
(51) Int. Cl.: B65G 43/08, B65G 47/51, B67C 7/00

(54) **ACCUMULATION APPARATUS FOR A BOTTLING PLANT AND METHOD FOR OPERATING SAID ACCUMULATION APPARATUS**

(30) Priority: 09.07.2024 IT 202400015829
(71) Applicant: Gruppo Bertolaso S.p.A., 37040 Zimella (VR) (IT)
(72) Inventor: ZECCHINATO, Diego, 36040 Sossano (VI) (IT); CASAROTTO, Fabio, 37030 Montecchia di Crosara (VR) (IT); MORETTI, Matteo, 36053 Gambellara (VI) (IT); RAMBALDI, Enrico, 37036 San Martino Buon Albergo (VR) (IT); MAZZON, Giovanni, 37047 Lobia di san Bonifacio (VR) (IT)
(74) Representative: Gallo, Luca

(57) **Abstract**

Accumulation apparatus (1) for a bottling plant (100) provided with a plurality of operating machines (101-106), comprising an upstream conveyor (2), susceptible to receive containers from an upstream machine (103), a downstream conveyor (3) susceptible to feed with the containers a downstream machine (105), a unit (4) for accumulating the containers and a directing assembly (5), which is arranged to intercept the upstream conveyor (2) and the downstream conveyor (3), is configured to pick up the containers from the upstream conveyor (2) and it is susceptible to selectively feed one of the downstream conveyor (3) and the accumulation unit (4).

The accumulation apparatus (1) comprises replenishment means (6), which are placed as a connection between the accumulation unit (4) and the downstream conveyor (3) at a replenishment station (61) downstream of the directing assembly (5), and they can be actuated to pick up the container from the accumulation unit (4) in order to feed the downstream conveyor (3). Furthermore, the upstream conveyor (2) is actuated by first drive means at a first operating speed (V1) and said downstream conveyor (3) is actuated by second drive means at a second operating speed (V2).

## Description

### Field of the invention

The present invention relates to an accumulation apparatus for a plant for bottling containers and a method for operating such accumulation apparatus according to the preamble of the respective independent claims.

The accumulation apparatus in question is designed to be used in a plant for bottling containers with liquids provided with multiple operating machines arranged in succession along a bottling line, to temporarily accumulate the containers in case of a temporary stop or slowing of the production of one or more of the operating machines.

The accumulation apparatus in question therefore relates to the industrial field of machines and apparatus for bottling containers with liquids.

### State of the art

As known, a modem bottling plant, particularly for bottling food products, generally comprises a machine for depalletizing the containers, that is adapted to pick up the containers from the pallets placing them on a conveying line, a rinsing machine, adapted to wash or even sterilize the containers, a filling machine for transferring a liquid foodstuff from a tank to the container, a capping machine for hermetically sealing each container for example with a cork cap, a labelling machine to affix on each container a suitable label and lastly a packaging machine for positioning a group of bottles in a packaging carton.

Needs of companies in the beverage industry, particularly in the wine making industry, increasingly require a high productivity of the bottling line and, therefore, limit to the maximum production downtime for example due to problems in one of the machines of the line, failures, format change or only even routine maintenance that is even only a simple intervention on an operating machine.

For example, it may happen that a bottle breaks in the initial rinsing stage at the rinsing machine, or in one of the final stages of the line for example in the capping stage at a capping machine for example with cork caps, or even that a bottle bursts in the bottling stage in particular if the line provides for a bottling with an isobaric machine for carbonated liquids such as for example sparkling wine.

Generally, the operating machines mentioned above are connected in a single production line through common conveying means associated with the operating machines and generally comprising belts, augers and star conveyor equipment. **In** particular, given that the common conveying means mentioned above are designed to convey the containers between one operating machine and the other of the bottling plant, an event that entails the stop of one of the operating machines would result in a temporary downtime of the entire line, given that the containers conveyed by the conveyor means could no longer pass through the operating machine which detected the problem.

To overcome this significant drawback, there is known the use of equipment for accumulating containers (generally referred to in the technical j argon of the industry with the expression "reservoir systems"), which are used in the field of industrial bottling plants to temporarily accumulate the containers in case of a temporary downtime or a slowing of the production of one of the operating machines associated with the line for example following a failure, as reported above, following the breaking of a container. The accumulation apparatus of the known type generally comprise an upstream conveyor, which receives containers from an upstream operating machine and a downstream conveyor, which is designed to feed with the containers a downstream operating machine, and a unit for accumulating the containers.

**In** particular, the accumulation unit is susceptible to receive containers from the upstream conveyor (coming from the upstream operating machine), to accumulate them temporarily for example in the event of failure of one of the operating machines arranged downstream along the bottling line. Furthermore, the accumulation unit is susceptible to feed the downstream conveyor with containers accumulated previously for example in the event of failure of one of the operating machines arranged upstream along the bottling line.

Examples of units for accumulating containers are described in patent IT PD2012U000046 on behalf of the Applicant in question.

Furthermore, the accumulation apparatus of the known type comprise a directing assembly, which is susceptible to pick up the containers from the upstream conveyor to selectively feed one of the downstream conveyor (to make the containers continue along the bottling line towards the downstream operating machine) and the accumulation unit (to accumulate the containers on the latter). Furthermore, the directing assembly is susceptible to pick up the containers from the accumulation unit in order to feed the downstream conveyor to introduce the containers accumulated previously in the bottling line conveying them towards the upstream operating machine.

**In** particular, the directing assembly is generally controlled by a control logic unit, which defines the operation thereof based on a control imparted by an operator, or based on the signal coming from sensors arranged on each operating machine of the bottling plant. Furthermore, the accumulation apparatus of the known type comprise an input conveyor, extending between the directing assembly and the accumulation unit and adapted to transfer the containers towards the latter, and an output conveyor, extending from the accumulation unit to the directing assembly and adapted to transfer the containers towards the latter.

**In** greater detail, the directing assemblies of the known type comprise a first star conveyor, which intercepts the upstream conveyor and a second star conveyor, which intercepts the downstream conveyor. Furthermore, the directing assembly comprises at least one third star conveyor, which intercepts the first star conveyor, the second star conveyor, the input conveyor and the output conveyor of the accumulation apparatus. In particular, the third star conveyor susceptible, based on the control imparted by the control logic unit, to be selectively fed by the first star conveyor or by the output conveyor, and it is susceptible to selectively feed the input conveyor and the second star conveyor.

For example, in the event of a failure in a downstream operating machine of the accumulation apparatus, the control logic unit controls the third star conveyor to pick up the containers from the first star conveyor and feed the input conveyor, so as to accumulate the containers in the accumulation unit. Otherwise, in the event of failure in an upstream operating machine, the control logic unit controls the third star conveyor to pick up the containers from the output conveyor and to place them on the downstream conveyor, so as to feed the operating machines downstream of the accumulation apparatus with the containers previously accumulated in the accumulation unit. Instead, should all the operating machines operate normally, the control logic unit controls the third star conveyor to pick up the containers from the first star conveyor and to transfer them to the second star conveyor, without making them pass through the accumulation unit.

An example of such apparatus of the known type is described in document IT 10201800003763.

The accumulation apparatus of the type briefly described above revealed some drawbacks in application.

The main drawback of such accumulation apparatus lies in the fact that they do not guarantee a sufficient operating flexibility and a high efficiency.

As a matter of fact, with the accumulation apparatus of the known type, for accumulating the containers in the accumulation unit there arises the need to temporarily stop the downstream conveyor, as a result stopping the production of the operating machines on the side of the plant downstream of the accumulation apparatus. Similarly, in order to reduce the number of containers in the accumulation unit accumulated previously, there arises the need to temporarily stop the upstream conveyor, as a result stopping the operating machines on the side of the plant upstream of the accumulation apparatus.

**In** particular, the stop of the production of a part of the plant results in an increase in the overall processing times and as a result in an increase in the production costs.

Document EP 2046670 also discloses an accumulation apparatus in which the third star conveyor is movable between a transfer position, in which it intercepts the first star conveyor and the second star conveyor, and a distal position, in which it does not intercept the star conveyor and the second star conveyor. The movement of the third star conveyor in the distal position allows, in particular, to kinematically de-couple the first star conveyor and the second star conveyor allowing the latter to move at different speed.

Also, the latter apparatus of the known type revealed some drawbacks in application.

In particular, providing the movable star conveyor significantly increases the mechanical complexity of the directing assembly, as a result increasing the production costs and increasing the frequency of the maintenance operations which result in an overall increase in the operating costs of such accumulation apparatus.

### Summary of the invention

In this situation, the technical problem underlying the present invention is to overcome the drawbacks revealed by the prior art known to date, by providing an accumulation apparatus for a bottling plant and an operation method of such accumulation apparatus, which are capable of guaranteeing the accumulation of containers while maintaining operative both the upstream operating machines and the downstream operating machines, with respect to the accumulation apparatus, of the bottling plant in which the accumulation apparatus is used.

A further object of the present invention is to provide an accumulation apparatus for a bottling plant and an operation method of such accumulation apparatus, which are capable of guaranteeing the recovery of the accumulated containers in the accumulation unit while maintaining operative both the upstream operating machines and the downstream operating machines, with respect to the accumulation apparatus, of the bottling plant in which the accumulation apparatus is used.

A further object of the present invention is to provide an accumulation apparatus and an operation method of such accumulation apparatus, which ensure a high productivity.

A further object of the present invention is to provide an accumulation apparatus and an operation method of such accumulation apparatus, which allow to maintain a high automation.

A further object of the present invention is to provide an accumulation apparatus and an operation method of such accumulation apparatus, that is structurally simple and operatively entirely reliable.

### Brief description of the drawings

The technical characteristics of the invention, according to the objects mentioned above, are clearly observable from the content of the claims outlined below and the advantages thereof will be more apparent from the detailed description that follows, provided with reference to the attached drawings, which represent an embodiment thereof provided purely by way of non-limiting example, wherein:

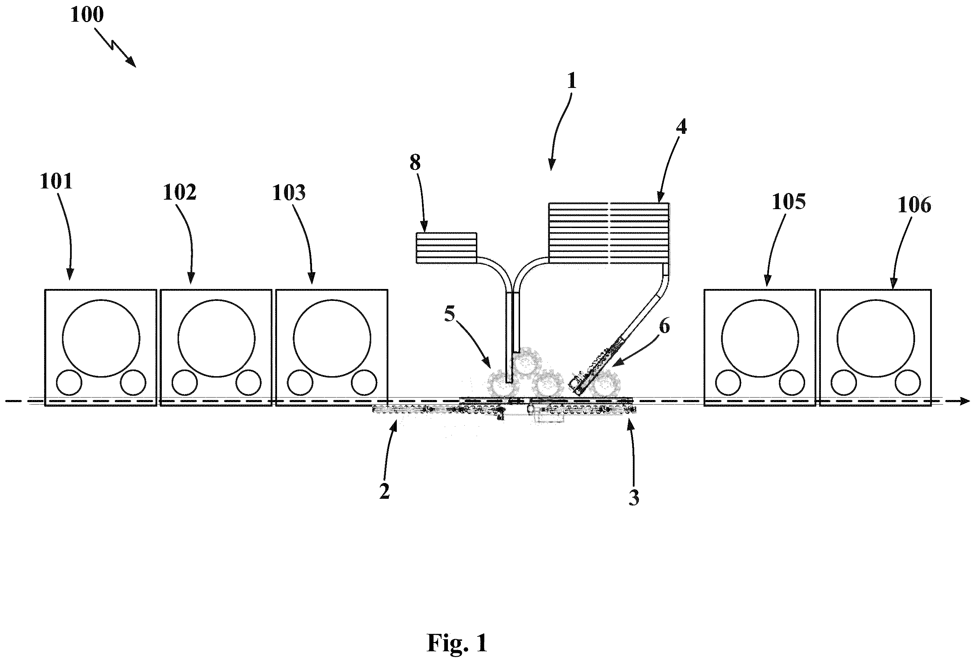

- figure 1 shows a schematized view of a bottling plant in which there is used an accumulation apparatus subject of the present invention;

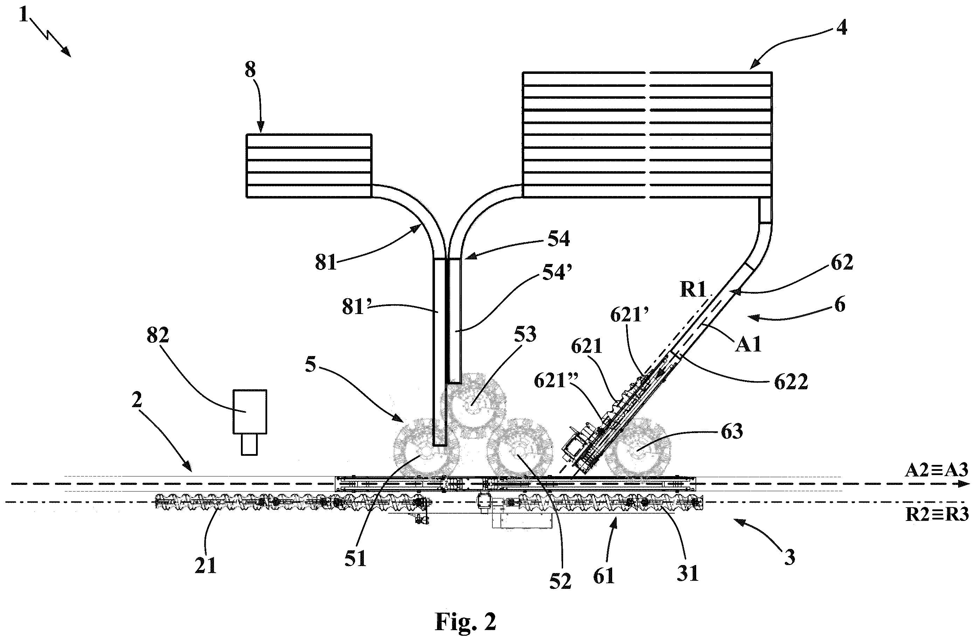

- figure 2 shows a top view of the accumulation apparatus subject of the present invention;
- figure 3a shows a top view of the accumulation apparatus of figure 2 in a by-pass mode, in which the trajectory followed by the containers is indicated with a bold dashed line;
- figure 3b shows a top view of the accumulation apparatus of figure 2 in a partial accumulation mode or in a partial recovery mode or in a transient mode in which the trajectory followed by the containers is indicated with a bold dashed line;
- figure 3c shows a top view of the accumulation apparatus of figure 2 in a total accumulation mode, in which the trajectory followed by the containers is indicated with a bold dashed line;
- figure 3d shows a top view of the accumulation apparatus of figure 2 in a total recovery mode, in which the trajectory followed by the containers is indicated with a bold dashed line.

### Detailed description of a preferred embodiment

With reference to the attached drawings, an embodiment of an accumulation apparatus for a bottling plant 100 subject of the present invention has been indicated in its entirety with 1.

The accumulation apparatus 1 in question is designed to be used in a plant 100 for bottling containers with a liquid preferably of the food type, for example alcoholic (wine, hard liquor, etc.) or non-alcoholic (fruit juice, carbonated beverages, water, etc.). Obviously, without departing from the scope of protection of the present patent, the bottling plant 100 may be used for packaging any other liquid, even not food liquid, in the containers. The containers used in the bottling plant 100 and, therefore, accumulated in the accumulation apparatus 1 subject of the present invention, may be obviously of any format, for example conventionally shaped like a bottle or with the bottle body that is parallelepiped-shaped or conical-shaped or even other shapes.

According to the example in the attached figures, the bottling plant 100 comprises a plurality of operating machines arranged in succession with respect to each other along a bottling line indicated with the arrow A, whose direction indicates the advancement direction of the containers along the bottling line A.

According to the example shown in the attached figures, such plurality of operating machines advantageously consists, in the advancement direction of the bottling line A, of a rinsing machine 101 which washes or also sanitizes the containers, a filling machine 102 which fills the containers with the desired liquid level, a capping machine 103 which closes the mouth of the containers, in what is referred to in the technical jargon of the field as the "wet" section of the plant 100.

Downstream of the capping machine 103 there are further advantageously present, in a section of the plant 100 which is usually identified as "dry" in the technical jargon of the field, a capsuling machine 105 for wrapping the head of the bottles with capsules made of the desired material, and a labelling machine 106 for applying the labels on the outer surface of the containers.

Obviously, there may also be provided for other operating machines in the bottling line A without departing from the scope of protection of the present patent.

Advantageously, the accumulation apparatus 1 subject of the present invention is adapted to be arranged along the bottling line mentioned above interposed between an operating machine upstream of the plurality of machines 101-106, which by way of example will be shown hereinafter with 103, that is with reference to the capping machine 103, and an operating machine downstream of the plurality of operating machines 101-106 which by way of example will be shown hereinafter with 105, that is with reference to the capsuling machine 105.

The accumulation apparatus 1 subject of the present invention comprises an upstream conveyor 2, susceptible to receive containers of the upstream machine 103 of the plurality of operating machines 101-106, and a downstream conveyor 3, susceptible to feed with the containers the downstream machine 105 of the plurality of operating machines 101-106 of the bottling plant 100 in which the accumulation apparatus is used.

Furthermore, the accumulation apparatus 1 comprises an unit 4 for accumulating the containers.

According to the embodiment shown in the attached figures, the accumulation unit 4 advantageously consists of an accumulation board, on which there are susceptible to be arranged the containers, which is susceptible to be fed with the containers coming from the upstream conveyor 2, and it is susceptible to feed the downstream conveyor 3 with the previously accumulated containers.

Without departing from the scope of protection of the present invention, the accumulation unit 4 may consist of any device adapted to accumulate containers even other than an accumulation board, such as for example a spiral accumulator.

Therefore, the expression "accumulation unit" is used to indicate any machine, such as for example an accumulation board or a spiral accumulator, having the possibility of accumulating containers.

The accumulation unit 4 is well known to the person skilled in the art and, therefore, it will not be described in greater detail below.

Furthermore, the accumulation apparatus 1 comprises a directing assembly 5 arranged to intercept the upstream conveyor 2 and the downstream conveyor 3, which is configured to pick up the containers from the upstream conveyor 2 and it is susceptible to feed, with said containers, selectively one of the downstream conveyor 3 and the accumulation unit 4.

**In** other words, the directing assembly 5 picks up from the upstream conveyor 2 each container conveyed by the latter (in particular coming from the upstream machine 103), and conveys it to the downstream conveyor 3 (in particular for making it continue towards the downstream machine 105) or to the accumulation unit 4 depending on the operative needs of the bottling plant 100 as will be addressed in greater detail below.

According to the idea underlying the present invention, the accumulation apparatus 1 comprises replenishment means 6, placed as a connection between the accumulation unit 4 and the downstream conveyor 3 at a replenishment station 61 downstream of the directing assembly 5. The replenishment means 6 mentioned above can be actuated to pick up the containers from the accumulation unit 4, preferably previously accumulated on the latter, to feed the downstream conveyor 3.

Furthermore, the upstream conveyor 2 is actuated by first drive means at a first operating speed V1 and said downstream conveyor 3 is actuated by second drive means at a second operating speed V2. **In** this context, the expression operating speed is used to indicate the speed at which the containers are conveyed by the corresponding conveyors.

Therefore, with the accumulation apparatus 1 subject of the present invention, the upstream conveyor 2 and the downstream conveyor 3 may be actuated respectively with a first operating speed V1 and a second operating speed V2 which are different from each other, in particular to accumulate containers in the accumulation unit 4 or to reduce the number of containers accumulated thereon, without having to fully stop one of the two and, therefore, without having to fully stop at least the operation of the upstream machine 103 or at least the downstream machine 105.

As a matter of fact, as reported above, the replenishment means 6 are placed as a connection between the accumulation unit 4 and the downstream conveyor 3, and they do not intercept the upstream conveyor 2 in any manner whatsoever. In other words, the replenishment means 6 are fully separated and independent from the directing assembly 5. In this manner, the number of bottles per minute with which the replenishment means 6 feed the downstream conveyor 3 (which, in particular, is proportional to the second operating speed V2 of the latter) is entirely independent from the number of bottles per minute that the directing assembly 5 picks up from the upstream conveyor 2 (which, in particular, is proportional to the first operating speed V1 of the upstream conveyor 2) to feed the accumulation board 4.

Advantageously, the accumulation apparatus 1 comprises a control logic unit operatively connected to the directing assembly 5, the replenishment means 6, the first drive means and the second drive means.

Advantageously, given that the control logic unit is connected to the first and second drive means so as to control them, it can manage the first and the second operating speed V1, V2 of the latter and, therefore, adjusts the number of containers per time unit that enter and exit from the accumulation apparatus 4 through the directing assembly 5 and the replenishment means 6.

Preferably, the control logic unit mentioned above is programmed at least in accordance with a by-pass mode, a partial accumulation mode and a partial recovery mode.

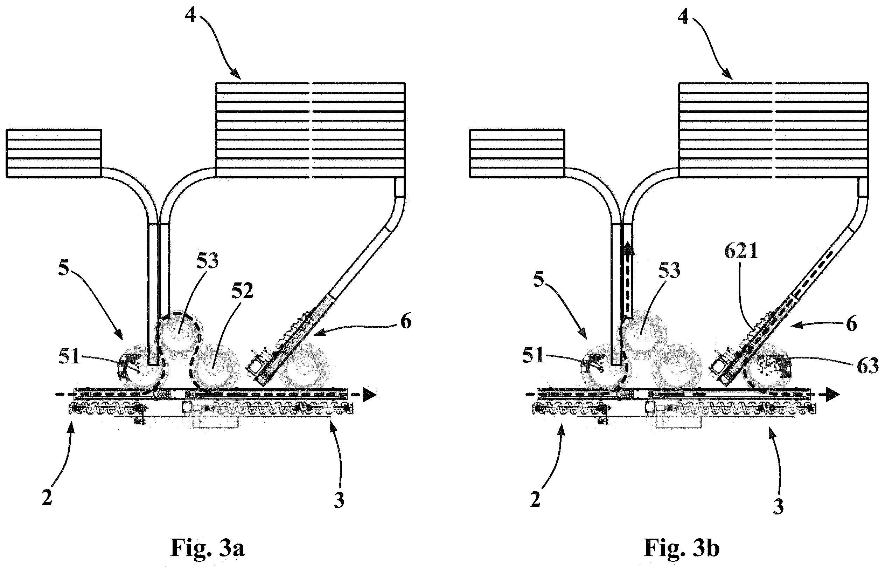

Advantageously, with reference to figure 3a, in the by-pass mode, the control logic unit controls the first drive means and the second drive means to respectively actuate the upstream conveyor 2 and the downstream conveyor 3 with identical first and second operating speed V1, V2. Preferably, in the by-pass mode, the control logic unit controls the directing assembly 5 to pick up the containers from the upstream conveyor 2 and feed the downstream conveyor 3 with such containers to make them continue along the bottling line A in particular towards the downstream machine 105.

Therefore, should there not be required the use of the accumulation apparatus 4 for various production needs, with the control logic unit configured to operate according to the by-pass mode, the directing assembly 5 transfers the containers from the upstream conveyor 2 to the downstream conveyor 3 making them continue towards the downstream machine 105.

Advantageously, in the partial accumulation mode, the control logic unit controls the first drive means and the second drive means to respectively actuate the downstream conveyor 2 and the upstream conveyor 3 with the first operating speed V1 higher than the operating speed V2. Preferably, in the partial accumulation mode, the first operating speed V1 and the second operating speed V2 are non-null. In other words, in the partial accumulation mode, both the upstream conveyor 2 and the downstream conveyor 3 convey containers, preferably respectively from the upstream machine 103 towards the accumulation unit 4 and moving away from the latter towards the downstream machine 105.

Advantageously, with reference to figure 3b, in the partial accumulation mode, the control logic unit controls the directing assembly 5 to pick up the containers from the upstream conveyor 2 and to feed the accumulation unit 4 with such containers, and controls the replenishment means 6 to pick up from the accumulation unit 4 the containers to feed the downstream conveyor 3 at the replenishment station 61.

In this manner, in the partial accumulation mode, the accumulation unit 4 receives containers of the directing assembly (in particular coming from the upstream conveyor 2), and at the same time the replenishment means 6 pick up containers from the accumulation unit 4 to feed the downstream conveyor 3. In other words, in the partial accumulation mode, there are containers both entering into and exiting from the accumulation unit 4. In particular, given that the first operating speed V1 is higher than the second operating speed V2, the amount of containers per time unit entering into the accumulation unit 4 is greater than the amount of containers per time unit exiting from the accumulation unit 4, therefore resulting in a progressive increase in the number of containers accumulated in the accumulation unit 4.

Advantageously, in the partial recovery mode, the control logic unit controls the first drive means and the second drive means to respectively actuate the upstream conveyor 2 and the downstream conveyor 3 with the first operating speed V1 lower than the operating speed V2. Preferably, in the partial recovery mode, the first operating speed V1 and the second operating speed V2 are non-null. **In** other words, in the partial recovery mode, both the upstream conveyor 2 and the downstream conveyor 3 convey containers, preferably respectively from the upstream machine 103 towards the accumulation unit 4 and moving away from the latter towards the downstream machine 105.

Advantageously, with reference to figure 3b, in the partial recovery mode, the control logic unit controls the directing assembly 5 to pick up the containers from the upstream conveyor 2 and to feed the accumulation unit 4 with such and controls the replenishment means 6 to pick up from the accumulation unit 4 the containers to feed the downstream conveyor 3 at the replenishment station 61.

**In** this manner, similarly to the partial accumulation mode mentioned above, in the partial accumulation mode the accumulation unit 4 receives containers of the directing assembly 5, and at the same time the replenishment means 6 pick up containers from the accumulation unit 4 to feed the downstream conveyor 3. **In** particular, given that the first operating speed V1 is lower than the second operating speed V2, the amount of containers per time unit entering into the accumulation unit 4 is lower than the amount of containers per time unit exiting from the accumulation unit 4, therefore resulting in a progressive decrease in the number of containers accumulated in the accumulation unit 4.

Operatively, in the event of standard operation of all operating machines 101-106, that is in the event of normal operation thereof, the control logic unit is preferably selected to operate preferably according to the by-pass mode.

In the event of a slowing down in production on the downstream machine 105 with respect to the accumulation apparatus 1 (that is any operating machines arranged along the bottling line A in the downstream section with respect to the accumulation apparatus 1), the control logic unit is preferably selected according to the partial accumulation mode, so as to accumulate containers on the accumulation unit 4 without slowing down the productivity of the portion of the bottling plant 100 upstream of the accumulation apparatus 1.

In the event of a slowing down in production on the upstream machine 103 with respect to the accumulation apparatus 1 (that is on at least any of the operating machines arranged along the bottling line A in the upstream section with respect to the accumulation apparatus 1), the control logic unit is preferably selected according to the partial recovery mode, in which it allows to use the containers previously accumulated in the accumulation unit 4 without slowing down the productivity of the portion of the bottling plant 100 downstream of the accumulation apparatus 1.

In this context, the expression "slowing production" shall be understood to mean a change in production due to a malfunction of one of the operating machines 101-106 such to decrease the productivity thereof (in terms of containers processed per time unit) however without necessarily resulting in the downtime, or an automatic choice of PLC of the bottling plant 100 or a direct choice of an operator depending on the production needs of the bottling plant 100.

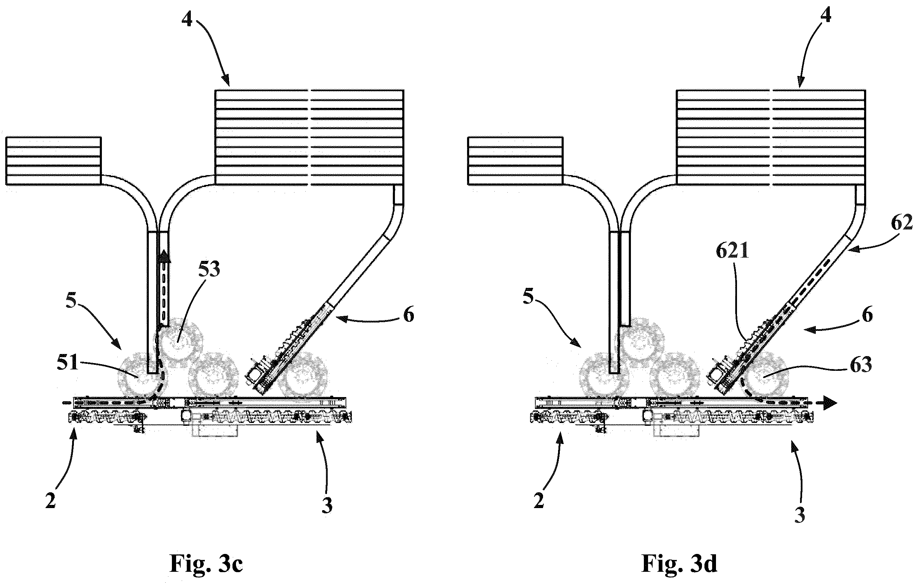

Advantageously, with reference to figure 3c, the control logic unit is programmed according to a total accumulation mode, in which it controls the second drive means to actuate the downstream conveyor 3 with the second operating speed V2 null and in which it controls the directing assembly 5 to pick up the containers from the upstream conveyor 2 and feed the accumulation unit 4 with such containers.

In this manner, in the total accumulation mode, the accumulation unit 4 receives containers of the directing assembly (in particular coming from the upstream conveyor 2), but without feeding the downstream conveyor 3, in particular through the replenishment means 6. In other words, in the total accumulation mode, it is exclusively provided for that the entry of containers in the accumulation unit 4, therefore resulting in a progressive increase in the number of containers accumulated in the accumulation unit 4, preferably quicker than the increase in the number of containers that occurs in the partial accumulation mode mentioned above.

For example, in the event of a downtime in production on the downstream machine 105 with respect to the accumulation apparatus 1 (that is on at least any of the operating machines 101- 106 arranged along the bottling line A in the downstream section with respect to the accumulation apparatus 1), the control logic unit is preferably selected according to the total accumulation mode, so as to accumulate containers on the accumulation unit 4 without necessarily having to stop the portion of the bottling plant 100 upstream of the accumulation apparatus 1.

Advantageously, with reference to figure 3d, the control logic unit is programmed in accordance with a total recovery mode, in which it controls the first drive means to actuate the upstream conveyor 2 with the first null operating speed V1 and in which it controls the replenishment means 6 to pick up the containers from the accumulation unit 4 to feed the downstream conveyor 3 at the replenishment station 61 mentioned above.

In this manner, in the total recovery mode, the replenishment means 6 pick up the containers from the accumulation unit 4 feeding the downstream conveyor 3, in particular to convey them towards the downstream machine 105, but without the accumulation unit 4 being fed with containers by the directing assembly 5. In other words, in the total recovery mode, it is exclusively provided for that the exit of containers in the accumulation unit 4, therefore resulting in a progressive increase in the number of containers accumulated in the accumulation unit 4, preferably quicker than the decrease in the number of containers that occurs in the partial recovery mode mentioned above. For example, in the event of a downtime in production on the upstream machine 103 with respect to the accumulation apparatus 1 (that is on at least any of the operating machines arranged along the bottling line A in the upstream section with respect to the accumulation apparatus 1), the control logic unit is preferably selected according to the total recovery mode, so as to feed the downstream conveyor 3 with containers previously accumulated on the accumulation unit 4.

In this context, the expression downtime of the production shall be understood to mean a full downtime in the production of one of the operating machines 101-106 of the bottling plant 100 for example due to a failure or malfunction, or an automatic choice of a PLC of the bottling plant 100 or a direct choice of an operator depending on the production needs of the bottling plant 100.

Advantageously, the control logic unit is programmed in accordance with a transient mode, in which it controls the first drive means and the second drive means to respectively actuate the upstream conveyor 2 and the downstream conveyor 3 with identical first and second operating speed V1, V2, and in which it controls the directing assembly 5 to pick up the containers from the upstream conveyor 2 feeding the accumulation unit 4 with such containers, and controls the replenishment means 6 to pick up the containers from the accumulation unit 4 feeding the downstream conveyor 3 with them at the replenishment station 61.

In particular, given that the first operating speed V1 and the second operating speed V2 are identical to each other, in such transient mode it is advantageously provided for that the number of containers per time unit which are placed in the accumulation unit 4 is equal to the number of containers per time unit that are picked up from the accumulation unit 4. In such situation, despite the number of containers in the accumulation unit 4 remains unchanged over time, the accumulation unit 4, in a known manner, is handled according to the FIFO (first in first out) logic, and therefore the containers in the accumulation unit 4 are physically always not the same but there is a continuous recirculation.

According to an embodiment not shown in the attached figures, the accumulation unit 3 comprises heating means (not shown in the attached figures), for heating the containers which pass through the accumulation unit 4.

For example, should the step for filling the containers be carried out with a low-temperature liquid, such as for example in the event of filling bottles with sparkling wine, the temperature difference between the outer surface of the container and the surrounding environment causes the generation of a layer of condensate on the outer surface of the container. In particular, the presence of the condensate layer is disadvantageous for example for the labelling step, given that it does not allow the label to adhere correctly to the container.

In this situation, the control logic unit is preferably selected according to the transient mode, so that the containers which pass through the accumulation unit 3 are heated by the heating means so as to return them to a temperature close to ambient temperature, so as to prevent the formation of the condensate.

Preferably, the heating means comprise for example electric resistors arranged beneath the accumulation unit 4, that is a device which generates a hot air jet which impacts the containers to heat them, that is with methods for heating containers which are well-known to the person skilled in the art, which therefore will not be described in detail.

Advantageously, the replenishment means 6 comprise a replenishment conveyor 62, which extends starting from the accumulation unit 4 towards the replenishment station 61 and it is susceptible to convey the accumulated containers in the accumulation unit 4 towards the downstream conveyor 3. Preferably, the replenishment means 6 comprise a replenishment star conveyor 63, which is arranged at the replenishment station 61 to intercept the replenishment conveyor 62 and the output conveyor 3 and it can be actuated to pick up the containers from the replenishment conveyor 62 and to feed with such containers the downstream conveyor 3 to introduce them into the bottling line A preferably towards the upstream machine 105.

Advantageously, the replenishment conveyor 62 and the replenishment star conveyor 63 are operatively connected to the control logic unit which is configured to actuate them based on the operating mode selected to pick up the containers from the accumulation unit 4 to feed the upstream conveyor 3 at the replenishment station 61.

According to the embodiment shown in the attached figures, the replenishment star conveyor 63 is a gripper star conveyor. Without departing from the scope of protection of the present invention, the replenishment star conveyor 63 may be any type of conveyor star available and well-known to the person skilled in the art, such as for example an alveoli star conveyor.

Advantageously, the replenishment conveyor 62 comprises a first auger 621 which feeds the replenishment star conveyor 63 with the containers, and a first conveyor belt 622, on which preferably there are susceptible to be arranged resting thereon the containers, configured to convey the containers at least from the accumulation unit 4 to the first auger 621, and preferably up to the replenishment station 61.

Preferably, the first auger 621 extends along a first rotation axis R1 between a first end portion 621', which is faced towards the accumulation unit 4, and an opposite second end portion 621", which is faced towards the downstream conveyor 3. In greater detail, the first auger 621 is susceptible to rotate around the first rotation axis R1 to move the containers along a first advancement direction A1 substantially parallel to the first rotation axis R1.

In particular, in a per se known manner, the first auger 621 is provided with a first spiral channel, which extends around the first rotation axis R1 and it is provided with first turns adapted to receive the containers to accompany them and distribute them along the replenishment conveyor 62. In this manner, the replenishment conveyor 62 feeds the replenishment star conveyor 63 with the containers equally spaced apart.

Advantageously, the replenishment means 6 comprise third drive means M3 which are mechanically connected to the replenishment conveyor 62 and to the replenishment star conveyor 63 to actuate them at a third operating speed V3. In particular, the third operating speed V3 is synchronized with the second operating speed V2 of the downstream conveyor 3, so that the replenishment means 6 convey an amount of containers per time unit substantially equal to the one conveyed by the downstream conveyor 3.

Preferably, the rotation speed of the replenishment star conveyor 63 is such that its tangential speed is substantially equal to the advancement speed of the replenishment conveyor 62, so as to allow the passage of the containers from the replenishment conveyor 62 to the replenishment star conveyor 63. Furthermore, the rotation speed of the replenishment star conveyor 63 is preferably such that its tangential speed is synchronized with the second operating speed V2 of the downstream conveyor 3, so as to allow the passage of the containers from the replenishment star conveyor 63 to the downstream conveyor 3.

Advantageously, the directing assembly 5 comprises at least one first star conveyor 51, which is arranged to intercept the upstream conveyor 2 to pick up the containers from the latter, at least one second star conveyor 52, which is arranged to intercept the downstream conveyor 3 to feed it with the containers, and at least one third star conveyor 53, preferably arranged to intercept the first star conveyor 51 and the second star conveyor 52.

Preferably, the third star conveyor 53, is fed by the first star conveyor 51 with containers picked up from the upstream conveyor 2, and it is susceptible to feed, with such containers picked up from the upstream conveyor 2, selectively one of the second star conveyor 52, in order to feed the downstream conveyor 3, and the accumulation unit 4 in order to feed the latter.

Advantageously, the third star conveyor 53 is operatively connected to the control logic unit, which is configured to control the third start conveyor 53 to selectively feed one of the second star conveyor 52 and the accumulation unit 4 at least based on the selected operating mode of the control logic unit.

For example, should the control logic unit be selected according to the by-pass mode, the third star conveyor 53 is actuated to feed the second star conveyor 52 to convey the containers picked up from the upstream conveyor 2 towards the downstream machine 105 through the upstream conveyor 3. Alternatively, should the control logic unit be selected according to at least one of the partial accumulation mode, the total accumulation mode and the partial recovery mode, the third star conveyor 53 is actuated to feed the accumulation unit 4 to convey the containers picked up from the upstream conveyor 2 towards the accumulation unit 4.

Advantageously, the third star conveyor 53 is a gripper star conveyor, which, in a per se known manner, advantageously comprises a rotary carousel centrally fixed to a motion transmission shaft to rotate around an axis and a plurality of grippers fitted peripherally on such rotary carousel. Each gripper is provided with at least one pair of arms which can be actuated to rotate around separate pins between at least one opening position, wherein the arms are spaced apart from each other to receive or release a container, and at least one closing position, wherein the arms are approached to retain the container to be moved between them. The gripper star conveyors are well known to the person skilled in the art and, therefore, they will not be described in greater detail below.

Preferably, the control logic unit actuates the grippers of the third star conveyor 53 to move the arms between the opening position and the closing position, advantageously at least based on the selected operating mode of the control logic unit.

According to the embodiment shown in the attached figures, the first star conveyor 51 and/or the second star conveyor 52 are gripper star conveyors. Without departing from the scope of protection of the present invention, the first star conveyor 51 and/or the second star conveyor 52 may be any type of conveyor star available and well-known to the person skilled in the art, such as for example an alveoli star conveyor.

Advantageously, the directing assembly 5 comprises a second conveyor belt 54, which is placed as a connection between the third star conveyor 53 and the accumulation unit 4 and it is susceptible to receive the containers from the third star conveyor 53 and convey them towards the accumulation unit 4.

Advantageously, the directing assembly 5 comprises fourth drive means M4, preferably mechanically connected to at least one of the first star conveyor 51, the second star conveyor 52, the third star conveyor 53 and the second conveyor belt 54, in order to actuate it at a fourth operating speed V4. In particular, the fourth operating speed V4 is synchronized with the first operating speed V1 of the upstream conveyor 2, so that through the directing assembly 5 there passes an amount of containers per time unit substantially equal to the one transported by the upstream conveyor 2.

Preferably, the rotation speed of the first star conveyor 51 is such that its tangential speed is substantially equal to the first operating speed V1 of the upstream conveyor 2, so as to allow the passage of the containers from the upstream conveyor 2 to the first star conveyor 51. Furthermore, the rotation speed of the third star conveyor 53 is preferably such that its tangential speed is equal to the tangential speed of the first star conveyor 51, so as to allow the passage of the containers from the first star conveyor 51 to the third star conveyor 53.

Advantageously, at least in the partial accumulation mode and total accumulation mode, the rotation speed of the third star conveyor 53 is such that its tangential speed is substantially equal to the advancement speed of the second conveyor belt 54, so as to allow the passage of the containers from the third star conveyor 53 to the second conveyor belt 54.

Preferably, at least in the by-pass mode, the rotation speed of the second star conveyor 52 is such that its tangential speed is substantially equal to the second advancement speed V2 of the downstream conveyor 3, so as to allow the passage of the containers from the second star conveyor 52 to the downstream conveyor 3.

According to the embodiment shown in the attached figures, the accumulation apparatus 1 comprises a discard storage unit 8 for housing discarded containers and a discard conveyor 81 placed as a connection between the directing assembly 5 and the discard storage unit 8.

In this context, the expression discarded containers shall be understood to indicate containers not compliant with the production standard (for example broken containers, or with internal solid residues, or which contain an amount of liquid other than the desired one, etc.) which should be removed from the bottling line A.

Advantageously, the accumulation apparatus 1 comprises inspection means 82 operatively connected to the control logic unit, preferably arranged to intercept the upstream conveyor 2, and configured to inspect each container conveyed by the upstream conveyor 2 towards the directing assembly 5 and to report to the control logic unit the containers deemed to be non-compliant.

Preferably, the directing assembly 5 can be actuated to pick up containers to be discarded from said upstream conveyor 2 and it is susceptible to selectively feed also said discard conveyor 81 to convey the containers to be discarded towards said discard storage unit 8. Operatively, when the inspection means 82 report that a container conveyed by the upstream conveyor 2 is not compliant, the control logic unit actuates the directing assembly 5 to pick up the non-compliant container from the upstream conveyor 2 and arrange such container on the discard conveyor 81 to convey it towards the discard storage unit 8.

According to the embodiment, the discard storage unit 81 extends between the third star conveyor 53 and the discard storage unit 8. Preferably, the third star conveyor 53 can be actuated to pick up the non-compliant container from the second star conveyor 52 and place it on the discard conveyor 81 to convey it towards the discard storage unit 8. Advantageously, the second conveyor belt 54 of the directing assembly 5 is provided with a first straight section 54', extending starting from the third star conveyor 53, and the discard conveyor 81 is provided with a second straight section 81' extending starting from the third star conveyor 53 parallel to the first straight section 54' of the second conveyor belt 54.

Preferably, the directing assembly 5 can be actuated to feed the discard storage unit 8 with non-compliant containers irrespective of the operating mode used to select the control logic unit. In other words, in any operating mode which provides for the passage of containers along the upstream conveyor 2 (therefore, in particular, all operating modes described above except for the total recovery mode) the non-compliant containers may be identified and conveyed to the discard storage unit 8 so as to remove them from the bottling line A.

Advantageously, the upstream conveyor 2 comprises at least one second auger 21, which extends along a second rotation axis R2 and it is susceptible to rotate around the latter in order to move the containers along a second advancement direction A2 substantially parallel to the second rotation axis R2. Advantageously, the second auger 21 is actuated rotate around the second rotation axis R2 by the first drive means.

In particular, in a per se known manner, the second auger 21 is provided with a second spiral channel, which extends around the second rotation axis R2 and it is provided with second turns adapted to receive the containers to accompany them and distribute them along the upstream conveyor 2.

Preferably, the upstream conveyor 2 comprises a third conveyor belt, on which the containers rest and which is provided to convey them along the second advancement direction A2 at a speed synchronized with the rotation speed of the second auger 21, so that the containers advance along the second advancement direction A2 without sliding on the third conveyor belt. Advantageously, the third conveyor belt is driven by the first drive means.

Advantageously, the downstream conveyor 3 comprises at least one third auger 31, which extends along a third rotation axis R3 and it is susceptible to rotate around the latter in order to move the containers along a third advancement direction A3 substantially parallel to the third rotation axis R3. Advantageously, the third auger 31 is actuated rotate around the third rotation axis R3 by the second drive means.

According to the embodiment shown in the attached figures, the third rotation axis R3 of the third auger 31 is parallel and advantageously aligned with the second rotation axis R2 of the second auger 21.

Preferably, the second advancement direction A2 of the upstream conveyor 2 is parallel and advantageously coincident with the third advancement direction A3 of the downstream conveyor 3.

**In** particular, in a per se known manner, the third auger 31 is provided with a third spiral channel, which extends around the third rotation axis R3 and it is provided with second turns adapted to receive the containers to accompany them and distribute them along the downstream conveyor 3.

According to the embodiment shown in the attached figures, the third auger 31 is susceptible to be selectively fed with containers by the directing assembly 5 (and in particular by the second star conveyor 52) or by the replenishment means 6 (and in particular by the replenishment star conveyor 63). Advantageously, in the by-pass mode mentioned above, the third auger 31 is fed by the directing assembly 5. Preferably, at least in the full recovery and partial recovery modes, the third auger 31 is fed by the replenishment means 6 with the containers coming from the accumulation unit 4.

Preferably, the downstream conveyor 3 comprises a fourth conveyor belt, on which the containers rest and which is provided to convey them along the third advancement direction A3 at a speed synchronized with the rotation speed of the third auger 31, so that the containers advance along the third advancement direction A3 without sliding on the fourth conveyor belt. Advantageously, the fourth conveyor belt is driven by the second drive means.

In greater detail, the first drive means control the second auger 21, and in particular its rotation speed around the second rotation axis R2, and the third conveyor belt to control the advancement speed of the containers along the second advancement direction A2.

For example, the first drive means comprise two first motors (e.g. brushless electric motors), each of which is operatively connected through corresponding first drive means respectively to the second auger 21 and to the third conveyor belt to actuate them together separately. Alternatively, the first drive means comprise a first motor operatively connected to both the second auger 21 and the third conveyor belt to actuate them simultaneously.

In greater detail, the second drive means control the second auger 31, and in particular its rotation speed around the third rotation axis R3, and the fourth conveyor belt to control the advancement speed of the containers along the third advancement direction A3.

For example, the second drive means comprise two second motors (e.g. brushless electric motors), each of which is operatively connected through corresponding second drive means respectively to the third auger 31 and to the fourth conveyor belt to actuate them together separately. Alternatively, the second drive means comprise a second motor operatively connected to both the third auger 31 and the fourth conveyor belt to actuate them simultaneously.

The present invention also relates to a method for operating an accumulation apparatus 1 of the type described above, whose reference numerals will be maintained for greater clarity of presentation.

The method provides that the accumulation apparatus 1 be actuated according to the operation of the operating machines 101-106 of the bottling plant 100 in which the accumulation apparatus 1 subject of the present invention is advantageously used. Advantageously, the bottling plant 100 in which accumulation apparatus 1 is preferably used comprises diagnostic means (not shown in the attached figures) associated with at least the above-mentioned upstream machine 103 and the above-mentioned downstream machine 105 to detect changes in productivity.

The expression "diagnostic means" shall be understood to refer not only to means aimed to detect malfunctions of the operating machines 101-106 of the bottling plant 100 but also to control systems actuated automatically by a PLC of the bottling plant 100 or even directly by the operator and taking into account automatic operating logic, for example programmed on the PLC, or operator choices, for example to meet slowing down in one section of the bottling line even in the absence of failures.

Such diagnostic means are well known to the person skilled in the art and, therefore, they will not be described in greater detail below.

Advantageously, the control logic unit of the accumulation apparatus 1 is adapted to be operatively connected to the diagnostic means in order to receive from the latter information on the operation of the operating machines 101-106 of the bottling plant 100. In greater detail, in the event of normal operation of the operating machines 101-106, the first drive means and the second drive means are controlled to respectively actuate the upstream conveyor 2 and the downstream conveyor 3 with identical first and second operating speed V1, V2, and the directing assembly 5 is actuated to pick up the containers from the upstream conveyor 2 and to feed the downstream conveyor 3 with such containers.

In the event of slowing down of the production of at least one of the operating machines 101-106 downstream of the accumulation apparatus 1, the first drive means and the second drive means are controlled to respectively actuate the upstream conveyor 2 and the downstream conveyor 3 with the first operating speed V1 greater than the second operating speed V2. Furthermore, in such situation, the directing assembly 5 is actuated to pick up the containers from the upstream conveyor 2 and to feed the accumulation unit 4 with such containers and the replenishment means 6 are actuated to pick up the containers from the accumulation unit 4 to feed the downstream conveyor 3.

In this manner, due to the difference in the operating speeds V1, V2 of the upstream conveyor 2 and downstream conveyor 3 respectively, with accumulation apparatus 1 and the operation method of the latter subject of the present invention, there can be progressively increased the number of containers accumulated in accumulation unit 4 while keeping all operating machines 101-106 of the bottling plant 100 running, in particular those arranged upstream and those arranged downstream of the accumulation apparatus 1.

Advantageously, in the event of downtime of the production of at least one of the operating machines 101-106 downstream of the accumulation apparatus 1, the second drive means are controlled to respectively actuate the downstream conveyor 3 with the second operating speed V2 null. In other words, the downstream conveyor 3 is stopped and does not convey any containers. In such situation, advantageously the directing assembly 5 is actuated to pick up the containers from the upstream conveyor 2 and to feed the accumulation unit 4 with such containers, while the replenishment means 6 are not actuated to pick up the containers from the accumulation unit 4 to feed the downstream conveyor 3.

In the event of slowing down of the production of at least one of the operating machines 101-106 upstream of the accumulation apparatus 1, the first drive means and the second drive means are controlled to respectively actuate the upstream conveyor 2 and the downstream conveyor 3 with the first operating speed V1 lower than the second operating speed V2. In such situation, the directing assembly 5 is actuated to pick up the containers from said upstream conveyor 2 and to feed the accumulation unit 4 with such containers and the replenishment means 6 are actuated to pick up the containers from the accumulation unit 4 to feed the downstream conveyor 3.

In this manner, due to the difference in the operating speeds V1, V2 of the upstream conveyor 2 and downstream conveyor 3 respectively, with accumulation apparatus 1 and the operation method of the latter subject of the present invention, there can be progressively reduced the number of containers accumulated previously in accumulation unit 4 while keeping all operating machines 101-106 of the bottling plant 100 running, in particular those arranged upstream and those arranged downstream of the accumulation apparatus 1.

Advantageously, in the event of downtime of the production of at least one of the operating machines 101-106 upstream of the accumulation apparatus 1, the first drive means are controlled to actuate the upstream conveyor 2 with the first operating speed V1 null. In other words, the upstream conveyor 2 is stopped and does not convey any containers. In such situation, advantageously, the directing assembly 5 is not actuated to pick up the containers from the upstream conveyor 2 to feed the accumulation unit 4, while the replenishment means 6 are actuated to pick up the containers from the accumulation unit 4 to feed the downstream conveyor 3.

Therefore, the invention thus conceived attains the pre-established objects.

## Claims

1. Accumulation apparatus for a bottling plant (100) which comprises a plurality of operating machines (101-106) in succession with respect to each other along a bottling line (A), said accumulation apparatus (1) comprising:
- an upstream conveyor (2), susceptible to receive containers from an upstream machine (103) of said plurality of operating machines (101-106);
- a downstream conveyor (3), susceptible to feed, with said containers, a downstream machine (105) of said plurality of operating machines (101-106);
- a unit (4) for accumulating the containers;
- a directing assembly (5) arranged to intercept said upstream conveyor (2) and said downstream conveyor (3), configured to pick up said containers from said upstream conveyor (2) and susceptible to feed, with said containers, selectively one of said downstream conveyor (3) and said accumulation unit (4);
said accumulation apparatus (1) being **characterized in that** it comprises replenishment means (6), placed as a connection between said accumulation unit (4) and said downstream conveyor (3) at a replenishment station (61) downstream of said directing assembly (5), and which can be actuated to pick up said containers from said accumulation unit (4) in order to feed said downstream conveyor (3);
and **in that** said upstream conveyor (2) is actuated by first drive means at a first operating speed (V1) and said downstream conveyor (3) is actuated by second drive means at a second operating speed (V2).

2. Accumulation apparatus according to claim 1, **characterized in that** it comprises a control logic unit operatively connected to said directing assembly (5), to said replenishment means (6), to said first drive means and to said second drive means; wherein said control logic unit is programmed according to at least the following operating modes:
- a by-pass mode, in which it controls said first drive means and said second drive means to respectively actuate said upstream conveyor (2) and said downstream conveyor (3) with identical first and second operating speed (V1, V2) and in which it controls said directing assembly (5) to pick up said containers from said upstream conveyor (2) and to feed, with said containers, said downstream conveyor (3) in order to make said containers continue along said bottling line (A);
- a partial accumulation mode, in which it controls:
- said first drive means and said second drive means to respectively actuate said downstream conveyor (2) and said upstream conveyor (3) with said first operating speed (V1) higher than said second operating speed (V2);
- said directing assembly (5) to pick up said containers from said upstream conveyor (2) and to feed, with said containers, said accumulation unit (4);
- said replenishment means (6) to pick up, from said accumulation unit (4), said containers in order to feed said downstream conveyor (3) at said replenishment station (61);
- a recovery mode, in which it controls:
- said first drive means and said second drive means to respectively actuate said downstream conveyor (2) and said upstream conveyor (3) with said first operating speed (V1) lower than said second operating speed (V2);
- said directing assembly (5) to pick up said containers from said upstream conveyor (2) and to feed, with said containers, said accumulation unit (4);
- said replenishment means (6) to pick up, from said accumulation unit (4), said containers in order to feed said downstream conveyor (3) at said replenishment station (61).

3. Accumulation apparatus according to claim 2, **characterized in that** said control logic unit is programmed in accordance with a total accumulation mode, in which it controls said second drive means to actuate said downstream conveyor (3) with said second operating speed (V2) null and in which it controls said directing assembly (5) to pick up said containers from said upstream conveyor (2) and to feed, with said containers, said accumulation unit (4).

4. Accumulation apparatus according to claim 2 or 3, **characterized in that** said control logic unit is programmed in accordance with a total recovery mode, in which it controls said first drive means to actuate said upstream conveyor (2) with said first operating speed (V1) null and in which it controls said replenishment means (6) to pick up, from said accumulation unit (4), said containers in order to feed said downstream conveyor (3) at said replenishment station (61).

5. Accumulation apparatus according to any one of the preceding claims, **characterized in that** said replenishment means (6) comprise:
- a replenishment conveyor (62), extending starting from said accumulation unit (4) towards said replenishment station (61) and it is susceptible to convey said containers accumulated on said accumulation unit (4) towards said downstream conveyor (3);
- a replenishment star conveyor (63), which is arranged at said replenishment station (61) to intercept said replenishment conveyor (62) and said output conveyor (3) and it can be actuated to pick up said containers from said replenishment conveyor (62) and to feed, with said containers, said downstream conveyor (3) in order to introduce said containers into said bottling line (A).

6. Accumulation apparatus according to claim 5, **characterized in that** said replenishment conveyor (62) comprises a first auger (621) which feeds, with said containers, said replenishment star conveyor (63), and a conveyor belt (622) configured to convey said containers at least from said accumulation unit (4) to said first auger (621).

7. Accumulation apparatus according to any one of the preceding claims, **characterized in that** said directing assembly (5) comprises:
- at least one first star conveyor (51), which is arranged to intercept the upstream conveyor (2) in order to pick up said containers from said upstream conveyor (2);
- at least one second star conveyor (52), which is arranged to intercept said downstream conveyor (3) in order to feed, with said containers, said downstream conveyor (3);
- at least one third star conveyor (53), which is fed by said first star conveyor (51) with containers picked up from said upstream conveyor (2), and is susceptible to feed, with said containers picked up from said upstream conveyor (2), selectively one of said second star conveyor (52), in order to feed said downstream conveyor (3), and said accumulation unit (4) in order to accumulate containers.

8. Accumulation apparatus according to claim 7, **characterized in that** said third star conveyor (53) is a gripper star conveyor.

9. Accumulation apparatus according to any one of the preceding claims, **characterized in that** it comprises a discard storage unit (8) for housing discarded containers and a discard conveyor (81) placed as a connection between said directing assembly (5) and said discard storage unit (8);
wherein said directing assembly (5) can be actuated to pick up containers to be discarded from said upstream conveyor (2) and it is susceptible to selectively feed also said discard conveyor (81) in order to convey said containers to be discarded towards said discard storage unit (8).

10. Method for operating an accumulation apparatus for a bottling plant (100) according to any one of the preceding claims, which provides for that said accumulation apparatus (1) be actuated according to the operation of said operating machines (101-106) of said bottling plant (100), wherein:
- in case of normal operation of said operating machines (101-106), said first drive means and said second drive means are controlled to respectively actuate said upstream conveyor (2) and said downstream conveyor (3) with identical first and second operating speed (V1, V2) and said directing assembly (5) is actuated to pick up said containers from said upstream conveyor (2) and to feed, with said containers, said downstream conveyor (3);
- in case of slowing of the production of at least one of said operating machines (101-106) downstream of said accumulation apparatus (1), said first drive means and said second drive means are controlled to respectively actuate said upstream conveyor (2) and said downstream conveyor (3) with said first operating speed (V1) higher than said second operating speed (V2), said directing assembly (5) is actuated to pick up said containers from said upstream conveyor (2) and to feed, with said containers, said accumulation unit (4) and said replenishment means (6) are actuated to pick up said containers from said accumulation unit (4) in order to feed said downstream conveyor (3);
- in case of slowing of the production of at least one of said operating machines (11-16) upstream of said accumulation apparatus (1), said first drive means and said second drive means are controlled to respectively actuate said upstream conveyor (2) and said downstream conveyor (3) with said first operating speed (V1) lower than said second operating speed (V2), said directing assembly (5) is actuated to pick up said containers from said upstream conveyor (2) and to feed, with said containers, said accumulation unit (4), and said replenishment means (6) are actuated to pick up said containers from said accumulation unit (4) in order to feed said downstream conveyor (3).
